# EUROPÄISCHE PATENTSCHRIFT

(11) **EP 4 047 258 B1**
(45) Veröffentlichungstag und Bekanntmachung des Hinweises auf die Patenterteilung: **29.07.2026**
(21) Anmeldenummer: 22153276.5
(22) Anmeldetag: 25.01.2022
(51) Int. Cl.: F16P 3/14

(54) **OPTOELEKTRONISCHE SICHERHEITSVORRICHTUNG**
OPTOELECTRONIC SECURITY DEVICE
DISPOSITIF DE SÉCURITÉ OPTOÉLECTRONIQUE

(30) Priorität: 19.02.2021 DE 102021103952
(43) Veröffentlichungstag der Anmeldung: 24.08.2022
(73) Patentinhaber: SICK AG, 79183 Waldkirch (DE)
(72) Erfinder: Jachmann, Fabian, 79102 Freiburg (DE); Schieber, Andreas, 79183 Waldkirch (DE)

(56) Entgegenhaltungen:
- WO-A2-2018/125438
- DE-A1- 102015 101 023
- US-A1- 2007 294 601
- MAJZIK ISTV�N ET AL: "Multiprocessor Checking Using Watchdog Processors FAUmachine View project Modula-2 View project", 31 December 2002 (2002-12-31), pages 1 - 16, XP055932111, Retrieved from the Internet <URL:https://www.researchgate.net/publication/2388151_Multiprocessor_Checking_Using_Watchdog_Processors> [retrieved on 20220616]

## Beschreibung

Die Erfindung betrifft eine optoelektronische Sicherheitsvorrichtung zur Überwachung eines Überwachungsbereichs, mit einem Lichtsender, einem Lichtempfänger und einer Auswerteeinheit zum Auswerten der Empfangssignale und davon abhängiger Ausgabe eines Sicherheitssignal.

Das wesentliche Problem, mit dem die vorliegende Erfindung sich hauptsächlich beschäftigt, betrifft die funktionale Sicherheit von optoelektronischen Sicherheitsvorrichtungen. In der Sicherheitstechnik eingesetzte Sensoren, wie z.B. Sicherheitslaserscanner, müssen besonders zuverlässig arbeiten und deshalb hohe Sicherheitsanforderungen erfüllen, beispielsweise die Norm IEC 61508 bzw. EN 62061 für sicherheitsgerichtete Systeme und die Gerätenorm EN61496 für berührungslos wirkende Schutzeinrichtungen (BWS). Durch diese Normen werden architektonische Vorgaben gemacht, die für verschiedene Sicherheit-Integrität-Level (SIL) anzuwenden sind.

Die geforderten Sicherheiten lassen sich durch eine Reihe von Maßnahmen erreichen, wie beispielsweise sichere elektronische Auswertung durch redundante, diversitäre Elektronik, Funktionsüberwachung und/oder spezielle Überwachung der Verschmutzung optischer Bauteile und/oder Vorsehen von einzelnen Testzielen mit definierten Reflexionsgraden, die unter den entsprechenden Scanwinkeln erkannt werden müssen. Ein einzelner Fehler kann in einem übersichtlichen System durch periodische Selbsttests aufgezeigt werden. Wenn etwa ein im Gehäuse einer optoelektronische Sicherheitsvorrichtung installiertes Referenzziel nicht oder falsch erfasst wird, kann geschlussfolgert werden, dass die Sensoreinheit dieses Geräts nicht mehr korrekt arbeitet. Innerhalb einer bestimmten Zeit kann also ein sicherheitskritischer Zustand erfasst werden und sicherheitsgerichtet abgeschaltet werden.

Komplexere Einheiten der optoelektronischen Sicherheitsvorrichtung können im System teilweise nicht schnell genug getestet werden. Dies betrifft vor allem die Signalverarbeitung auf Prozessor-Ebene. Hier ist es üblich die Verarbeitung zweikanalig auszuführen und zu vergleichen. Wird von jeweils einem Prozessor eine Abweichung zum Ergebnis im anderen Prozessor festgestellt, führt dies zu einem sicherheitsgerichteten Abschalten. Jedem Prozessor steht dabei ein redundanter Kanal zum Abschalten zur Verfügung.

Die vollständige Selbsttestung eines solchen Systems erfordert oft mehr Rechenleistung als die eigentliche Sicherheitsfunktion. Die vollständige zweikanalige Ausführung der Prozessor-Einheit mit redundanten Recheneinheiten und getrenntem Speicher erhöht Bauraum, Kosten und Abwärme des Geräts. Insbesondere die Kopplung von einem einkanaligen Sensor-Frontend in ein zweikanaliges Prozessor-Backend kann problematisch sein. Es gibt dedizierte Lockstep-Dual-Core Prozessoren, die für Safety-Anwendungen optimiert sind. Diese Prozessoren schließen Fehler gemeinsamer Ursache auf einem Chip aus. Allerdings sind diese Chips nicht in hohen Performance-Klassen verfügbar. Zudem bieten sie derzeit nicht die Integration von programmierbarer Logik (FPGA) oder ausreichende Variabilität an Interfaces oder Zusatzmodulen (z.B. ADCs).

Da Sicherheitsmaßnahmen also immer viel extra Aufwand und Kosten bedeuten, ist es das Bestreben, die Sicherheitsmaßnahmen so einfach und effizient wie möglich, aber dennoch effektiv und ausreichend zu gestalten.

Aus der EP 0 605 496 B1 ist ein Sicherheitslichtgitter bekannt, bei dem ein Systemprozessor über einen Watchdog Controller überprüft wird, um eine sichere Funktionsweise zu gewährleisten.

Aus der DE 102015101023 A1 ist ein Sicherheit Schaltgerät bekannt, bei dem ein erster Signalverarbeitungskanal auf einem ersten Halbleitersubstrat und ein zweiter Signalverarbeitungskanal auf einem zweiten Halbleitersubstrat angeordnet sind, wobei die beiden Halbleitersubstrat monolithisch zu einem Stapel und damit zu einem einstückigen, elektronischen Bauteil zusammengesetzt sind. Hierbei handelt es sich um ein neuartiges Bauteil, das als dedizierter Sicherheitsbaustein speziell für die Sicherheitsanwendung ausgebildet ist und in seiner Zusammensetzung zwar nur ein einziges Bauteil bildet, aber die einzelnen Schichten des Stapels getrennte Halbleitersubstrate für die dort strikt zu trennenden Signalverarbeitungskanäle sind.

Die WO 20128/125438 A2 offenbart einen nicht-sicheren LIDAR Scanner, der ein sogenanntes "adaptive scanning" aufweist, bei dem Objekte je nach Winkelbereich mit unterschiedlicher Ortsauflösung gescannt werden können.

Aus Majzik Istvan et al "Multiprocessor Checking Using Watchdog Processors FAUmachine View project Modula-2 View project", 31. Dezember 2002 (2002-12-31), Seiten 1-16, XP55932111 und aus der US 2007/0294601 A1 ist eine Prozessorüberwachung mittels eines Watchdog Prozessors bekannt.

Ausgehend von diesen Stand der Technik ist es Aufgabe der Erfindung, eine optoelektronische Sicherheitsvorrichtung bereitzustellen, mit der die genannten Nachteile vermieden werden können, bei der insbesondere der Aufwand und die Kosten für die Sicherheitsmaßnahmen reduziert sind ohne das Sicherheitsniveau zu verlieren.

Diese Aufgabe wird gelöst durch eine Vorrichtung mit den Merkmalen des Anspruchs 1.

Eine erfindungsgemäße optoelektronische Sicherheitsvorrichtung umfasst einen Lichtsender zur Aussendung von Sendelichtstrahlen in einen Überwachungsbereich, einen Lichtempfänger zur Erzeugung von Empfangssignalen aus empfangenen Empfangslichtstrahlen, die von Reflexionen der Sendelichtstrahlen an wenigstens einem Objekt im Überwachungsbereich stammen, eine Auswerteeinheit zur Auswertung der Empfangssignale und zum Ausgeben eines Sicherheitssignals in Abhängigkeit der Empfangssignale, wobei die Auswerteeinheit eine Recheneinheit mit wenigstens zwei CPUs aufweist, wobei die Recheneinheit kein dedizierter Sicherheitsbaustein ist und als Standard-Mehrkernprozessor auf nur einem Halbleitersubstrat ausgebildet ist. Dieser Standard-Mehrkernprozessor erfüllt für sich keine Sicherheitsnorm und ist im Handel standardmäßig erhältlich. Die Auswertung erfolgt redundant auf beiden CPUs der Recheneinheit und die Auswerteeinheit weist einen Watchdog Controller auf, der die Funktion der Recheneinheit überwacht, wobei der Watchdog Controller unabhängig von der Recheneinheit die Auswerteeinheit veranlassen kann, das Sicherheitssignal auszugeben.

Bekannte Standard-Mehrkernprozessoren sind als preisgünstige integrierte Bausteine verfügbar, die alle Komponenten vereinen, um eine komplexe, optoelektronische Sicherheitsvorrichtung zu steuern und auszuwerten. Der Standard-Mehrkernprozessor ist für sich kein dedizierter Sicherheitsbaustein. Prinzipiell stünden zur Auswertung mehrere, insbesondere zwei, identische Prozessoren zur Verfügung, um eine zweikanalige Signalauswertung auszuführen und damit die funktionale Sicherheit zumindest zu erhöhen. Jedoch verwenden beide Prozessoren gewisse Teile des Systems gemeinsam, so dass bereits ein Fehler zum sicherheitskritischen Ausfall des Systems führen kann. Die Herausforderung dieser Erfindung, also der Nutzung eines Standard Mehrkernprozessors für eine optische Sicherheitsvorrichtung besteht darin, mögliche Fehler sowohl gemeinsamer Ursache mit Auswirkung auf beide Prozessoren als auch in den gemeinsam genutzten Teilen des Standard-Mehrkernprozessors zur Laufzeit zu identifizieren und zu diagnostizieren. Dies erfolgt erfindungsgemäß über einen Watchdog Controller, der unabhängig vom Standard-Mehrkernprozessor die Möglichkeit hat, den Sicherheitsausgang zu schalten. Durch die Überwachung des Standard-Mehrkernprozessors und die unabhängige Möglichkeit den Sicherheitsausgang zu schalten, kann die funktionale Sicherheit mittels des Watchdog Controllers gewährleistet werden. Dabei muss ein solcher Watchdog Controller weit geringere Anforderungen erfüllen als ein ansonsten notwendiger zweiter Prozessorkanal. Dementsprechend bleiben Kosten und Energieverbrauch auf einem extrem niedrigen Niveau. Kosten können gespart und Abwärme kann reduziert werden.

Weitere Integration und damit Kosteneinsparung und Abwärmereduktion kann erreicht werden, wenn die Recheneinheit als Teil eines SoC (System-on-Chip) ausgebildet ist.

In einfacher Weise kann der Watchdog Controller extern zum SoC vorgesehen werden.

Vorteilhafterweise bildet der Watchdog Controller mit einer der CPU der Recheneinheit einen zweiten logischen Abschaltkanal. Der Watchdog Controller hat damit zwei Funktionen, nämlich einerseits die Funktion der Recheneinheit zu überwachen und andererseits zusammen mit einer der CPUs einen quasi diversitären Abschaltkanal zu bilden.

In Weiterbildung der Erfindung führt der Watchdog Controller zur Überprüfung der CPUs verschiedene Tests durch, wobei diese Tests
- einen Taktfrequenzvergleich,
- einen Aktivitätstest,
- das Generieren von Aufgaben für eine CPU und das Kontrollieren entsprechender Aufgabenergebnisse oder
- das Überwachen von Spannungen
umfassen können.

In Weiterbildung der Erfindung kommuniziert der Watchdog Controller über ein serielles Interface abwechselnd mit jeweils einer CPU der Recheneinheit. Auf diese Weise können beispielsweise die oben genannten zwei Auswertekanäle gebildet werden.

In Weiterbildung der Erfindung ist es auch möglich, dass der Prozessor weitere Rechenkerne enthält, beispielsweise zur Erhöhung der Rechenleistung. Dies könnte bei dem Einsatz der Erfindung in 3-D-Kameras sinnvoll sein.

Zur Erhöhung der Sicherheit kann es vorgesehen sein, dass eine Überwachungsvorrichtung vorgesehen ist, die den Standard-Mehrkernprozessor veranlasst, zu einzelnen Funktionen kontinuierlich Selbsttests durchzuführen.

Mit besonderem Vorteil wird die Erfindung eingesetzt in Sicherheitslaserscannern, FMCW Radar, FMCW Lidar, 3D-ToF Sicherheitskamera oder in Sicherheitssensoren basierend auf Sensor-Datenfusion. Diese Vorrichtungen sind elektronisch sehr aufwändig mit aufwändiger Datenverarbeitung und benötigen deshalb große Rechenleistungen, so dass es vorteilhaft ist, wenn der Aufwand zur Erreichung der funktionalen Sicherheit möglichst einfach bleibt.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer erfindungsgemäßen optoelektronische Vorrichtung im Einsatz;
- Fig. 2: ein Blockschaltbild wesentlicher Komponenten der erfindungsgemäßen, optoelektronische Sicherheitsvorrichtung

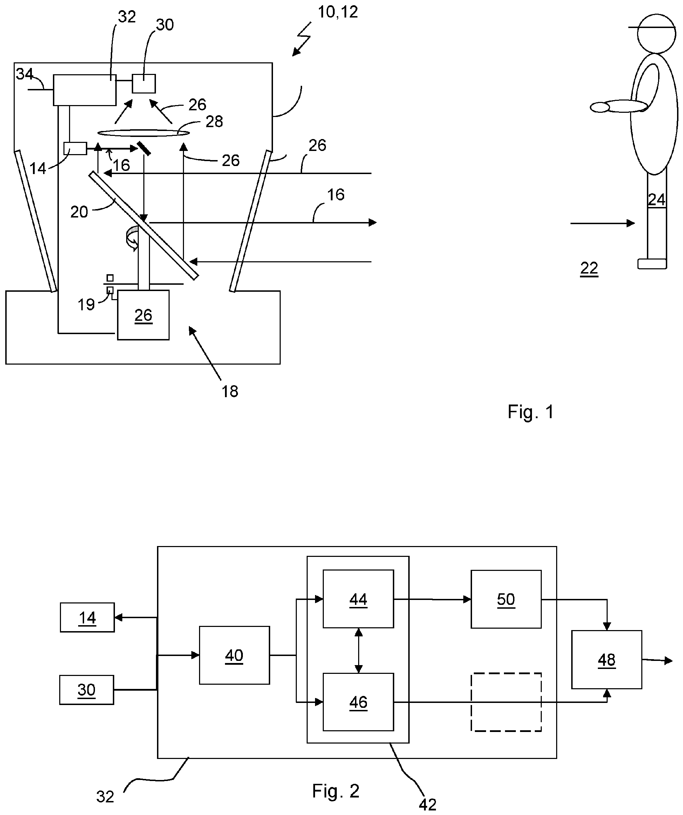

In Fig. 1 ist als Ausführungsbeispiel einer erfindungsgemäßen, optoelektronische Sicherheitsvorrichtung 10 ein Sicherheitslaserscanner 12 dargestellt. Dieser arbeitet nach dem bekannten Lichttaster-Betrieb, in dem ein Lichtsender 14 Sendelichtstrahlen 16 in Form von Lichtpulsen aussendet. Die Sendelichtstrahlen 16 werden über eine rotierende Ablenkeinheit 18 mittels eines Spiegels 20 ausgesandt.

Wenn ein Objekt 24 sich in dem Sichtbereich des Sicherheitslaserscanner 12 befindet, werden die Sendelichtstrahlen 16 an diesem Objekt 24 reflektiert. Die Reflexionen der Sendelichtstrahlen 16 werden als Empfangslichtstrahlen 26 auf gleichem Weg über die Ablenkeinheit 18 und eine Empfangsoptik 28 einem Lichtempfänger 30 zugeführt und dort in Empfangssignale umgewandelt.

Die Empfangssignale werden einer Auswerteeinheit 32 zugeführt zur Auswertung der Empfangssignale und zum Ausgeben eines Sicherheitssignals an einem Ausgang 34 in Abhängigkeit der Empfangssignale. In der Auswerteeinheit 32, die auch den Lichtsender 14 ansteuert, wird die Pulslaufzeit der Sendelichtpulse erfasst und daraus der Abstand des Sicherheitslaserscanner 12 zum Objekt 24 bestimmt. Zusätzlich wird die Drehstellung der Ablenkeinheit 18 zum Zeitpunkt des Lichtaussendens über einen Encoder 19 erfasst, so dass insgesamt aus der Kenntnis des Ablenkwinkels und der Entfernung zum Objekt 24 der Ort des Objekts 24 bekannt ist. Auf diese Weise kann geprüft werden, ob sich das Objekt 24 in einem bestimmten Überwachungsbereich 22 befindet. So erfolgt eine Überwachung des Überwachungsbereichs 22 daraufhin, ob sich Objekte 24 in dem Überwachungsbereich 22 befinden oder nicht. Abhängig davon, ob sich ein Objekt 24 in dem Überwachungsbereich 22 befindet, kann das Sicherheitssignal an dem Ausgang 34 ausgegeben werden.

Kern dieser Erfindung ist der Aufbau der Auswerteeinheit 32 und die Art und Weise der Auswertung, so dass in einfacher Weise eine sichere Funktion der Auswerteeinheit 32 im Sinne der funktionalen Sicherheit nach relevanten Sicherheitsnormen gewährleistet werden kann.

Einen prinzipiellen und stark vereinfacht dargestellten Aufbau zeigt Fig. 2. Dort ist die Auswerteeinheit 32 dargestellt, die vom Lichtempfänger 30 die Lichtempfangssignale fängt und auswertet und den Lichtsender 14 steuert. Die Auswerteeinheit 32 umfasst neben einem FPGA 40, das die analogen Signale von Lichtempfänger 30 und Lichtsender 14 sendet und empfängt, eine Recheneinheit 42 mit wenigstens zwei CPUs 44 und 46. die Recheneinheit 42 ist kein dedizierter Sicherheitsbaustein, also erfüllt keine relevante Sicherheitsnorm und ist als Standard-Mehrkernprozessor 42 ausgebildet, der auf nur einem einzigen Halbleitersubstrat ausgebildet ist. Derartige Standard-Mehrkernprozessoren sind im Handel standardmäßig erhältlich. Der Standard-Mehrkernprozessor ist bevorzugt als Teil eines SoC (System-on-Chip) ausgebildet. Der Standard-Mehrkernprozessor 42 wertet die vom FPGA 40 weitergeleiteten Empfangssignale redundant auf den beiden CPUs 44 und 46 aus und abhängig von der Auswertung wird das Sicherheitssignal an eine I/O Einheit 48 geleitet. Die I/O-Einheit 48 ist mit dem Ausgang 34 verbunden, an dem das Sicherheitssignal dann bereitgestellt ist.

Erfindungsgemäß weist die Auswerteeinheit 32 zusätzlich einen Watchdog Controller 50 auf, der die Funktion des Standard-Mehrkernprozessors 42 überwacht, wobei der Watchdog Controller 50 unabhängig vom Standard-Mehrkernprozessor 42 die Auswerteeinheit 32 veranlassen kann, das Sicherheitssignal auszugeben. Dazu ist der Watchdog Controller 50 einerseits mit dem Standard-Mehrkernprozessor 42 verbunden und andererseits mit der I/O-Einheit 48. Der Watchdog Controller 50 kann physisch separat vom Standard-Mehrkernprozessor 42 ausgebildet sein oder Teil einer SoC-Einheit sein.

Wie in Fig. 2 dargestellt bildet der Watchdog Controller 50 mit einer der CPUs, hier mit der CPU 44 des Standard-Mehrkernprozessors 42 einen ersten logischen Abschaltkanal. Der andere, zweite logische Abschaltkanal ist durch die CPU 46 gebildet. Der Watchdog Controller 50 hat damit zwei Funktionen, nämlich einerseits die Funktion, den Standard-Mehrkernprozessors 42 zu überwachen und andererseits zusammen mit der CPU 44 einen quasi diversitären ersten Abschaltkanal zum zweiten Abschaltkanal zu bilden. Es ist auch möglich, dass der Watchdog Controller 50 zusammen mit der CPU 46 einen logischen Abschaltkanal bildet. Bevorzugt bildet der Watchdog Controller 50 alternierend mal mit der CPU 44 und ein anderes Mal mit der CPU 46 einen Abschaltkanal, wie in Figur 2 gestrichelt dargestellt. Die Kommunikation zwischen den CPUs 44 bzw. 46 einerseits und dem Watchdog Controller 50 andererseits erfolgt über ein serielles Interface.

Der Watchdog Controller 50 führt zur Überprüfung der CPUs 44 und 46 verschiedene Tests durch, wobei diese Tests einen Taktfrequenzvergleich, einen Aktivitätstest, das Generieren von Aufgaben für eine CPU 44 bzw. 46 und das Kontrollieren entsprechender Aufgabenergebnisse oder das Überwachen von Spannungen umfassen können.

Die Timer des Standard-Mehrkernprozessors 42 und des Watchdog Controllers 50 werden dabei miteinander verglichen und Abweichungen der Timer bzw. ihrer Oszillationen können detektiert werden.

Weiter überwacht der Watchdog Controller 50 die Kommunikation mit dem Standard-Mehrkernprozessor 42 in Bezug auf das erforderliche Timing. Das bedeutet, dass der Watchdog Controller 50 überprüft, ob die mit ihm verbundenen, sicherheitsrelevanten Module noch aktiv sind (alive check) und korrekt kommunizieren. Fehler im Timing oder sonstige Fehler führen zum sicherheitsgerichteten Abschalten.

## Patentansprüche

1. Optoelektronische Sicherheitsvorrichtung mit
- einem Lichtsender (14) zur Aussendung von Sendelichtstrahlen (16) in einen Überwachungsbereich (22),
- einem Lichtempfänger (30) zur Erzeugung von Empfangssignalen aus empfangenen Empfangslichtstrahlen (26), die von Reflexionen der Sendelichtstrahlen (16) an wenigstens einem Objekt (24) im Überwachungsbereich (22) stammen,
- einer Auswerteeinheit (32) zur Auswertung der Empfangssignale und zum Ausgeben eines Sicherheitssignals in Abhängigkeit der Empfangssignale,
- wobei die Auswerteeinheit (32) eine Recheneinheit (42) mit wenigstens zwei CPUs (44, 46) aufweist, wobei die Recheneinheit (42) kein dedizierter Sicherheitsbaustein ist und als Standard-Mehrkernprozessor auf nur einem Halbleitersubstrat ausgebildet ist und die Auswertung redundant auf beiden CPUs (44 und 46) der Recheneinheit (42) erfolgt,
- und **dadurch gekennzeichnet, dass** die Auswerteeinheit (32) einen Watchdog Controller (50) aufweist, der die Funktion der Recheneinheit (42) überwacht, wobei der Watchdog Controller (50) unabhängig von der Recheneinheit (42) die Auswerteeinheit (32) veranlassen kann, das Sicherheitssignal auszugeben.

2. Sicherheitsvorrichtung nach Anspruch 1, **dadurch gekennzeichnet, dass** die Recheneinheit als Teil eines SoC (System-on-Chip) ausgebildet ist.

3. Sicherheitsvorrichtung nach Anspruch 2, **dadurch gekennzeichnet, dass** der Watchdog Controller extern zum SoC vorgesehen ist.

4. Sicherheitsvorrichtung nach einem der vorhergehenden Ansprüche, **dadurch gekennzeichnet, dass** der Watchdog Controller mit einer der CPUs der Recheneinheit einen zweiten logischen Abschaltkanal bildet.

5. Sicherheitsvorrichtung nach einem der vorhergehenden Ansprüche, **dadurch gekennzeichnet, dass** der Watchdog Controller zur Überprüfung der CPUs verschiedene Tests durchführt.

6. Sicherheitsvorrichtung nach Anspruch 5, **dadurch gekennzeichnet, dass** die Tests
- einen Uhrenvergleich,
- einen Aktivitätstest,
- das Generieren von Aufgaben für eine CPU und das Kontrollieren entsprechender Aufgabenergebnisse oder
- das Überwachen von Spannungen
umfassen.

7. Sicherheitsvorrichtung nach einem der vorhergehenden Ansprüche, **dadurch gekennzeichnet, dass** der Watchdog Controller über ein serielles Interface abwechselnd mit jeweils einer CPU der Recheneinheit kommuniziert.

8. Sicherheitsvorrichtung nach einem der vorhergehenden Ansprüche, **dadurch gekennzeichnet, dass** die Recheneinheit weitere CPUs enthält.

9. Sicherheitsvorrichtung nach einem der vorhergehenden Ansprüche, **dadurch gekennzeichnet, dass** eine Überwachungsvorrichtung vorgesehen ist, die die Recheneinheit veranlasst, zu einzelnen Funktionen kontinuierlich Selbsttests durchzuführen.

10. Sicherheitsvorrichtung nach einem der vorhergehenden Ansprüche, **dadurch gekennzeichnet, dass** diese als Sicherheitslaserscanner, als FMCW Radar, FMCW Lidar, als 3D-ToF Sicherheitskamera oder als Sicherheitssensor basierend auf Sensor-Datenfusion ausgebildet ist.

## Claims

1. Optoelectronic safety device with
- a light transmitter (14) for emitting transmitting light beams (16) into a monitoring area (22),
- a light receiver (30) for generating receiving signals from received light rays (26) originating from reflections of the transmitting light beams (16) on at least one object (24) in the monitoring area (22),
- an evaluation unit (32) for evaluating the receiving signals and for issuing a safety signal depending on the receiving signals,
- wherein the evaluation unit (32) has one computing unit (42) with at least two CPUs (44, 46), wherein the computing unit (42) is not a dedicated safety component and is designed as a standard multi-core processor on only one semiconductor substrate and the evaluation is carried out redundantly on both CPUs (44 and 46) of the computing unit (42),
- and **characterized in that**
the evaluation unit (32) has a watchdog controller (50) which monitors the function of the computing unit (42), wherein the watchdog controller (50) can cause the evaluation unit (32) to output the safety signal independently of the computing unit (42).

2. Safety device according to claim 1, **characterized in that** the computing unit is designed as part of a SoC (system-on-chip).

3. Safety device according to claim 2, **characterized in that** the watchdog controller is intended externally to the SoC.

4. Safety device according to any of the preceding claims, **characterized in that** the watchdog controller forms a second logical shutdown channel with one of the CPUs of the computing unit.

5. Safety device according to any of the preceding claims, **characterized in that** the watchdog controller performs various tests to check the CPUs.

6. Safety device according to claim 5, **characterized in that** the tests comprise
- a watch comparison,
- an activity test,
- Generating tasks for a CPU and checking corresponding task results, or
- Monitoring voltages.

7. Safety device according to one of the preceding claims, **characterized in that** the watchdog controller communicates alternately with one CPU of the computing unit via a serial interface.

8. Safety device according to any of the preceding claims, **characterized in that** the computing unit contains additional CPUs.

9. Safety device according to any of the preceding claims, **characterized in that** a monitoring device is provided which causes the computing unit to continuously perform self-tests on individual functions.

10. Safety device according to any of the preceding claims, **characterized in that** it is designed as a safety laser scanner, as an FMCW radar, as an FMCW lidar, as a 3D ToF security camera or as a safety sensor based on sensor data fusion.

## Revendications

1. Dispositif de sécurité optoélectronique avec
- un émetteur lumineux (14) pour émettre des faisceaux lumineux émetteurs (16) dans une zone de surveillance (22),
- un récepteur lumineux (30) pour générer des signaux de réception à partir des rayons lumineux reçus (26) provenant des réflexions des faisceaux lumineux émetteurs (16) sur au moins un objet (24) dans la zone de surveillance (22),
- une unité d'évaluation (32) pour évaluer les signaux de réception et pour émettre un signal de sécurité dépendant des signaux de réception,
- dans lequel l'unité d'évaluation (32) comporte une unité de calcul (42) avec au moins deux CPU (44, 46), dans lequel l'unité de calcul (42) n'est pas un composant de sécurité dédié et est conçue comme un processeur multi-cœur standard sur un seul substrat semi-conducteur, et l'évaluation est réalisée redondantement sur les deux CPU (44 et 46) de l'unité de calcul (42),
- et **caractérisé en ce que**
l'unité d'évaluation (32) comporte un contrôleur de surveillance (50) qui surveille la fonction de l'unité de calcul (42), dans lequel le contrôleur de surveillance (50) peut faire en sorte que l'unité d'évaluation (32) émette le signal de sécurité indépendamment de l'unité de calcul (42).

2. Dispositif de sécurité, selon la revendication 1, **caractérisé en ce que** l'unité de calcul est conçue comme faisant partie d'un SoC (system-on-chip).

3. Dispositif de sécurité selon la revendication 2, **caractérisé en ce que** le contrôleur de surveillance est destiné à l'extérieur du SoC.

4. Dispositif de sécurité selon l'une des revendications précédentes, **caractérisé en ce que** le contrôleur de surveillance forme un deuxième canal d'arrêt logique avec l'un des CPU de l'unité de calcul.

5. Dispositif de sécurité selon l'une des revendications précédentes, **caractérisé en ce que** le contrôleur de surveillance effectue des tests divers pour vérifier les CPU.

6. Dispositif de sécurité selon la revendication 5, **caractérisé en ce que** les tests comportent
- une comparaison de montres,
- un test d'activité,
- la généreration de tâches pour une CPU et vérification des résultats correspondants, ou
- la surveillance des tensions.

7. Dispositif de sécurité selon l'une des revendications précédentes, **caractérisé en ce que** le contrôleur de surveillance communique via une interface série en alternance avec une CPU respective de l'unité de calcul.

8. Dispositif de sécurité selon l'une des revendications précédentes, **caractérisé en ce que** l'unité de calcul contient des CPU supplémentaires.

9. Dispositif de sécurité selon l'une des revendications précédentes, **caractérisé en ce qu'**un dispositif de surveillance et prévu ce qui permet à l'unité de calcul d'effectuer en continu des auto-tests sur des fonctions individuelles.

10. Dispositif de sécurité selon l'une des revendications précédentes, **caractérisé en ce que** le dispositif de sécutité est conçu comme scanner laser de sécurité, radar FMCW, lidar FMCW, caméra de sécurité 3D ToF ou capteur de sécurité basé sur la fusion des données des capteurs.
